# EUROPEAN PATENT SPECIFICATION

(11) **EP 2 148 788 B1**
(45) Date of publication and mention of the grant of the patent: **16.05.2012**
(21) Application number: 08746469.9
(22) Date of filing: 21.04.2008
(51) Int. Cl.: B60K 1/00

(54) **WHEEL MOTOR**
RADMOTOR
MOTEUR DE ROUE

(30) Priority: 19.04.2007 US 912896 P
(43) Date of publication of application: 03.02.2010
(73) Proprietor: BluWav Systems, LLC, Rochester Hills MI 48309 (US)
(72) Inventor: KENDALL, Todd, A., Macomb, MI 48044 (US); PAVLOV, Kevin, J., Livonia, MI 48152 (US); SCIRIHA, Adam, Mount Clemens, MI 48043 (US)
(74) Representative: Hössle Patentanwälte Partnerschaft
(86) International application number: PCT/US2008/061059
(87) International publication number: WO 2008/131358

(56) References cited:
- EP-A1- 1 719 656
- WO-A2-2006/076321
- WO-A2-2008/027159
- JP-A- 2001 032 888
- US-A1- 2005 206 250
- US-A1- 2005 236 198
- US-A1- 2007 078 035

## Description

### RELATED APPLICATIONS

This application claims benefit of priority to U.S. Provisional Patent Application No. 60/912,896 filed April 19, 2007 which is incorporated by reference in its entirety.

### TECHNICAL FIELD

The invention relates to electric motors and, specifically, to an electric motor housed within a wheel of a vehicle.

### BACKGROUND ART

Existing hybrid vehicles use a single electric motor that provides torque to a drive train connected to the wheels of the vehicle, in a manner similar to how a gas-powered engine provides torque through a drive shaft and axle. It is believed that the additional weight and complexity of the drive train and axle reduces the efficiency of the hybrid vehicle and electric motor, and reduces the carrying capacity and range of the hybrid vehicle. It is also believed that existing motors that are housed in a wheel do not maximize the size of the stator located within the wheel, and also provide systems that do not allow for the assembly and disassembly of transmission and load-bearing components separately from the motor components.

Some existing systems are described in, for example, U.S. Patent No. 5,087,229 which describes a motor with a multi-component motor housing that does not permit the transmission components, such as the outer ring gear of the planetary gear set assembly, to be removed from the motor without accessing and disassembling the motor components held within the housing. U.S. Patent No. 6,321,863 describes a hub motor for bicycles. U.S. Patent No. 5,453,930 describes independent motors driven with differing torque to maximize efficiency, detect and correct for slip situations and yaw/stability situations. U.S. Patent No. 5,431,607 describes an actuator that automatically applies a friction brake to prevent a vehicle from moving in a direction opposite a selected drive direction in a vehicle equipped with electric drive. U.S. Patent No. 5,163,528 describes a cooling system for a wheel motor. U.S. Patent Nos. 5,101,925 and 5,000,282 describe a hydraulic wheel motor. U.S. Patent No. 4,541,051 describes a land vehicle that uses at least two independent motors whose speed and acceleration are monitored and controlled to steer the vehicle. U.S. Patent No. 4,330,045 describes a drive motor for large off-road equipment. U.S. Patent No. 3,443,655 describes a motorized wheel assembly which can be attached to mining cars as either a steering wheel or fixed wheel. U.S. Patent No. 4,275,616 describes a hollow wheel support with an axial piston hydraulic motor. U.S. Patent No. 5,509,497 describes another type of hydraulic wheel motor. U.S. Patent No. 6,943,478 describes brushless hub motor suitable for automobiles. U.S. Patent No. 6,974,399 describes an electric motor and planetary gear system. U.S. Patent No. 6,971,467 describes another hub motor for bicycles. U.S. Patent No. 6,942,049 describes a wheel system with an inboard motor, a drive shaft, a planetary gear, and a main bearing. U.S. Patent No. 6,328,123 describes an electric motor inside a wheel. U.S. Patent Nos. 5,358,456; 3,812,928; 5,127,485; and 6,484,834 describe other wheel motors.
EP 1 719 656 A1 discloses a motor-driven wheel drive device with a housing consisting of a plurality of parts directed on an improvement of the durability of the wheel bearing and providing a removable connecting shaft thus allowing to replace the wheel bearing, the planetary reduction gear and a driving section by easily separating them from each other when carrying out maintenance.

A need is recognized for a motor disposed in a wheel of a vehicle with an arrangement that promotes a compact design while maximizing the size of the stator within the wheel, and that permits the removal, repair, or replacement of motor and wheel components in subassemblies without disassembly of the entire wheel-motor system.

### DISCLOSURE OF INVENTION

The invention provides a housing for a wheel motor that has a continuous and unitary housing wall separating the electrical motor components from the mechanical transmission components of the wheel motor, while providing a structure to support the wheel motor within a vehicle with engagement to a suspension system, to a wheel, and to support a brake caliper, and further providing a cooling structure to transfer heat away from the motor components. Preferably, the electrical motor components include a stator and a rotor with the rotor engaging a axially central motor shaft communicating with the mechanical transmission components through an axially-disposed port defined by the housing wall. The mechanical transmission components preferably include a planetary gear system disposed about the motor shaft and communicating with the electrical motor components, and preferably include an output shaft that engages a wheel mount that turns a wheel surrounding the wheel motor and that shares a common longitudinal axis with the rotor, motor shaft, and wheel mount. The housing is preferably reinforced to convey load forces through the housing wall to support the wheel motor within a vehicle while connected to a suspension system at suspension mounts and the wheel at the wheel mount while maximizing the radial size of the stator disposed within the interior of the wheel surrounding the wheel motor and while maintaining the axial position of the planetary gears and load bearings of the mechanical transmission within the inner diameter of the stator and at a common axial position as the stator.

The continuous and unitary housing wall defines a toroidal volume, a disc volume, and a cylindrical volume that all share a common longitudinal axis. The toroidal volume is disposed circumferentially around an end portion of the cylindrical volume and the disc volume is proximate to the end of the cylindrical volume. At the end of the cylindrical volume, a portion of the toroidal volume communicates with the disc volume to define a common toroidal-disc volume. The housing wall is disposed between the end portion of the cylindrical column and the toroidal-disc volume. Preferably, the housing wall also surrounds the radial periphery of the common toroidal-disc volume. The continuous and unitary housing wall also defines a bowl-shaped volume and a cylindrical volume having a common longitudinal axis. A concave side of the bowl-shaped volume is disposed circumferentially around an end portion of the cylindrical volume. The housing wall is disposed between the end portion of the cylindrical column and the bowl-shaped volume. Preferably, the housing wall also surrounds the radial periphery of the bowl-shaped volume.

The electrical motor components are disposed within the toroidal-disc or bowl-shaped volumes and the mechanical transmission components are disposed in the cylindrical volume. Preferably, the stator is disposed in the toroidal portion of the toroidal-disc volume, the rotor is disposed in the toroidal portion and disc portion of the toroidal-disc volume, and a portion of the motor shaft is disposed in the disc portion of the toroidal-disc volume. Also preferable, the radial exterior surface of the stator engages the housing wall to form a path for the conduction of heat from the stator to the housing wall. Also preferably, the planetary gears are between the motor shaft and the output shaft to transmit power from the motor to the output shaft. Preferably, the planetary gears and most or all of the bearings supporting the motor and output shafts are disposed on a common portion of the longitudinal axis surrounded by the stator. The output shaft engages a wheel mount engaging a wheel that surrounds the wheel motor and, preferably the wheel is disposed on a common portion of the longitudinal axis surrounded by the stator. The positioning of the transmission components, such as the planetary gears, the load-bearing components, such as the bearings supporting the motor and output shaft, and the wheel are on a common portion of the longitudinal axis that is surrounded by the stator.

The separation of the electrical motors components on one side of the housing wall from the transmission and load-bearing components on the other side of the housing wall allows the wheel motor to be divided into a portion having electrical components in a dry medium that is primarily air or in a wet medium having a cooling fluid, and into a portion having relatively oily transmission and load-bearing components in a medium that is primarily lubricant or a mixture of air and lubricant. The separation of the electrical motor components on one side of the housing wall from the transmission and load-bearing components on the other side of the housing wall allows the assembly and disassembly of the wheel motor to be divided into a motor assembly and a transmission and load-bearing assembly, and the transmission and load-bearing assembly is preferably further divided into a separate transmission assembly and load-bearing assembly. The motor components also are preferably pre-assembled before installation into the housing or installed into the housing as individual components without installing or removing components from the transmission and load-bearing side of the housing. Likewise, the motor components are preferably uninstalled or disassembled as an assembly or as individual components without accessing or removing components from the transmission and load-bearing side of the housing. The transmission and load-bearing components are preferably similarly pre-assembled before installation into the housing or installed into the housing as individual components without installing or removing components from the motor side of the housing. Likewise, the transmission and load-bearing components are preferably uninstalled or disassembled as an assembly, as assemblies, or as individual components without accessing or removing components from the motor side of the housing.

The wheel motor preferably has a housing with a continuous and unitary housing wall defining a longitudinal axis, an outer circumferential surface, and inboard and outboard ends of the housing wall. The outboard end of the housing wall defines an outboard face orthogonal to the axis, with the outboard face extending inwardly from the outer circumferential surface of the housing wall towards the axis to a portion of the housing wall extending axially in an outboard direction to define an outboard aperture communicating with an first interior volume of the housing. The inboard end of the housing wall extends longitudinally to define an inboard aperture that is larger than the outboard aperture and that communicates with a second interior volume of the housing, with the second interior volume circumferentially surrounding at least a portion of the first interior volume. A motor shaft is disposed on the axis and extends between the first and second interior volumes, with the motor shaft supported by motor bearings disposed in the first interior volume about the motor shaft and abutting a first interior surface of the housing wall. A wheel mount extends from the outboard face, with an inboard end of the wheel mount communicating with the motor shaft through a planetary gear assembly, and with the wheel mount supported by wheel mount bearings disposed in the first interior volume about the wheel mount and abutting a second interior surface of the housing wall having an inner diameter that is greater than an inner diameter of the first interior surface. A rotor engages an end of the motor shaft disposed in the second interior volume, with magnets of the rotor disposed circumferentially about the first interior volume. A stator is disposed on an interior surface of the housing wall in the second interior volume and circumferentially surrounds the first interior volume, with the stator circumferentially surrounding the motor bearings, a planetary gear of the planetary gear assembly, and at least one of the wheel mount bearings.

Another preferred embodiment is a wheel motor having a housing with a continuous wall, with the wall defining a toroidal volume surrounding a cylindrical volume, and the toroidal volume and cylindrical volume having a common longitudinal axis. A motor is disposed in the toroidal volume, with the motor including a stator and a rotor with at least a portion of the rotor disposed in the toroidal volume, and at least one of the rotor and stator defining a motor length along the axis and disposed at a first position on the axis. A planetary gear set is disposed within the cylindrical volume, with the planetary gear set including at least one planetary gear, with the at least one planetary gear defining a gear length along the axis that is less than the motor length and defining a second position on the axis that is within the first position, and with a portion of a wheel mount disposed within the cylindrical volume.

Yet another preferred embodiment is a wheel motor having a housing with a continuous wall, with the wall defining a bowl-shaped volume having a concave side proximate to an and of a cylindrical volume, and with the bowl-shaped volume and cylindrical volume having a common longitudinal axis, and with the radial extremities of the bowl-shaped volume surrounding the cylindrical volume. A motor is disposed in the bowl-shaped volume, with the motor including a stator and a rotor disposed in the bowl-shaped volume, and at least one of the rotor and stator defining a motor length along the axis and disposed at a first position on the axis. A planetary gear set is disposed within the cylindrical volume, and the planetary gear set includes at least one planetary gear, with the at least one planetary gear defining a gear length along the axis that is less than the motor length and defining a second position on the axis that is within the first position, and with a portion of a wheel mount disposed within the cylindrical volume.

Another preferred embodiment includes a wheel motor with a housing having a housing wall that defines an interior compartment and a longitudinal axis extending through the housing, with the housing wall having a first portion radially proximate to the axis to define a first longitudinal length of the housing and having a second portion radially farther from the axis to define a second longitudinal length of the housing, and with the first longitudinal length being less than the second longitudinal length. A transition of the housing wall from the second portion to the first portion defines a recess, that provides the cylindrical volume, accessible from an outboard side of the housing, with the housing having a reinforcement portion for attachment to a vehicle suspension. A transmission is disposed within the recess, a wheel mount is disposed within the recess and coupled to the transmission, and the wheel mount extends from the outboard side of the housing. Stator and rotor elements are disposed within the interior compartment to radially surround the recess and a wheel bearing at least partly within the recess and supporting the outboard side of the housing.

In an alternative embodiment, the wheel motor also includes a housing with a housing wall defining an interior compartment and aligned with a longitudinal axis extending through the housing, with the housing wall having a first portion radially proximate to the axis to define a first longitudinal length of the housing and having a second portion radially farther from the axis to define a second longitudinal length of the housing, with the first longitudinal length being less than the second longitudinal length, with a transition of the housing wall from the second portion to the first portion that defines a recess accessible from an outboard side of the housing, and with the housing having a reinforcement portion for attachment to a vehicle suspension. A planetary transmission and a gear set carrier with a wheel mount is disposed in the recess, and the wheel mounted is supported by a wheel bearing, with stator and rotor elements disposed within the interior compartment to radially surround the recess, and with the wheel bearing supporting the outboard side of the housing.

In another alternative embodiment, the wheel motor also includes a housing with a housing wall defining an interior compartment and a longitudinal axis extending through the housing, with the housing wall having a first portion radially proximate to the axis to define a first longitudinal length of the housing and having a second portion radially farther from the axis to define a second longitudinal length of the housing, with the first longitudinal length being less than the second longitudinal length, with a transition of the housing wall from the second portion to the first portion defining a recess accessible from an outboard side of the housing, and with the housing having a reinforcement portion for attachment to a vehicle suspension. A wheel mount is supported by a wheel bearing engaging the housing to transmit a load to the housing, and the wheel motor has a rotor and a stator each having windings and disposed in the interior compartment, with the stator affixed to an interior surface of the housing to diffuse heat from the stator to the housing as a heat sink, and with the housing supporting the wheel bearing and functioning as a primary dissipater of heat for the rotor and stator.

The preferred embodiments further include a planetary transmission having a planetary gear train, a wheel bearing disposed within the recess, or a wheel engaging the wheel mount so as to be radially and longitudinally centered about the wheel bearing. The wheel motor has a rotor engaging a shaft that engages the planetary transmission, a housing with external cooling fins and the stator element attached directly to an interior surface of the housing, or a bearing sleeve sized to fit within the recess and having an interior surface formed to engage the wheel bearing and the wheel mount as a unit separable from the housing. The wheel motor also has a gear set carrier with a splined portion that engages a splined portion of the wheel mount, a rotational displacement indicator within the interior compartment and attached to the rotor element to indicate a position of the rotor element, or a planetary transmission with planetary gears carried by the gear set carrier with the wheel bearing disposed adjacent to and at a radial position at least in part equal to an axis of rotation of one of the planetary gears and the gear set carrier having a shaft portion disposed within an interior diameter of the wheel bearing. The wheel motor also alternatively includes a brake caliper affixed to the housing, the housing being substantially shaped as a disk with a depression formed on a side of the disk by the recess, the housing having an inboard side opposite the outboard side and the inboard side having a substantially flat surface, or a portion of the wall disposed between the toroidal volume and the cylindrical volume and the portion of the wall being parallel to the axis.

A preferred embodiment includes a method that includes enclosing a motor within a housing, with the motor engaging a shaft extending through the housing to engage a transmission disposed at a center of the motor and outside of the housing, and supporting a weight of the vehicle by transmitting load forces from a wheel mount through the housing to a suspension connected to the housing. In an alternative embodiment, this method includes providing a housing with a well and the supporting includes inserting a wheel bearing and a wheel mount in the well. The inserting includes inserting a seal in the well between the housing the wheel mount. Alternatively, a gear train is inserted into the well. The method includes inserting a gear train on the shaft adjacent to the wheel bearing, and the housing providing a barrier between the motor and the wheel mount.

The preferred method provides a method of generating torque using a stator and a rotor that both axially surround a gear train about a common longitudinal axis of the gear train, applying the torque through the gear train to rotate the wheel mount, and supporting a vehicle through the wheel mount by transmitting load forces through a wheel bearing at one end of the gear train to suspension mount at another end of the gear train. The method includes transmitting load forces through a housing that encloses the stator and the rotor, or providing a barrier between the rotor and the gear train with a seal.

The preferred method also provides a method that includes inserting a stator and a rotor into a first cavity defined by a first side of a single-piece housing, and inserting a gear train into a second cavity defined by an opposite second side of the single-piece housing, with the gear train and rotor rotating about a common longitudinal axis of the wheel motor, and with the gear train disposed at a center of the rotor. Alternatively, the method includes attaching a cap on the first side to enclose the first cavity and enclose the stator and the rotor, inserting a wheel bearing into the second cavity, the wheel bearing in the second cavity engaging a wall of the single-piece housing, or transmitting vehicle load forces from the wheel bearing to a suspension mounted to the single-piece housing on the first side. This method also includes inserting a seal into the second cavity, the single-piece housing separating the stator and the rotor from the gear train, or driving the wheel mount with the gear train.

The preferred method also includes identifying a bearing shaft subassembly that contains a bearing and a wheel mount, and removing the bearing sleeve subassembly from an output shaft of a transmission, with the transmission disposed in an axial center of a motor and separated from the motor by a wall surrounding the motor.

The preferred method includes attaching a wheel motor to the suspension of a vehicle, with the wheel motor including a housing and a motor, and with the housing defining a well on an outboard side of the housing and disposed in an axial center of the motor and separated from the motor by a wall surrounding the motor, and then removing a subassembly containing a bearing and a wheel mount from an output shaft of a transmission to remove the bearing from the well. This method includes the housing supporting a vehicle suspension and the wheel mount, removing a transmission from the well, or the transmission including a planetary gear.

The preferred method also includes attaching a wheel motor to the suspension of a vehicle, with the wheel motor including a housing and a motor enclosed within the housing, and with the housing defining a well on an outboard side of the housing and disposed in an axial center of the motor and separated from the motor by a wall surrounding the motor, and removing a first subassembly containing a wheel mount from an output shaft of a transmission to remove a first bearing from inside the well, and removing a second subassembly containing a second bearing from inside the well. This method alternatively includes the housing providing support between a vehicle suspension and the wheel mount, or removing of a transmission from the well.

### BRIEF DESCRIPTION OF THE DRAWINGS

The accompanying drawings, which are incorporated herein and constitute part of this specification, illustrate exemplary embodiments of the invention, and, together with the general description given above and the detailed description given below, serve to explain the features of the invention.

Figs. 1A and 1B are isometric views of the preferred housing of a wheel motor according to a preferred embodiment.

Figs. 2A and 2B are cross-section views of the housing of Figs. 1A-1B.

Fig. 3 is an axial cross-section view of a wheel motor according to a preferred embodiment of the invention.

Fig. 4 is an isometric view of another preferred embodiment of a wheel motor.

Fig. 5 is a partial cross-section view of the wheel motor of Fig. 4.

Fig. 6 is another partial cross-section view of the wheel motor of Fig. 5 and a partial cross-sectional view of a wheel on a wheel mount.

Fig. 7 is an axial cross-section view of a wheel motor according to another preferred embodiment of the invention.

Figs. 8A and 8B are exploded isometric views of the wheel motor of Fig. 4.

Fig. 9 is a wheel motor and wheel according to another embodiment of the invention and including the housing of Figs. 1A-2B.

Fig. 10A is an axial cross-section view of the wheel motor and wheel of Fig. 9.

Fig. 10B is an axial cross-section view of the wheel motor of Fig. 9.

### MODE(S) FOR CARRYING OUT THE INVENTION

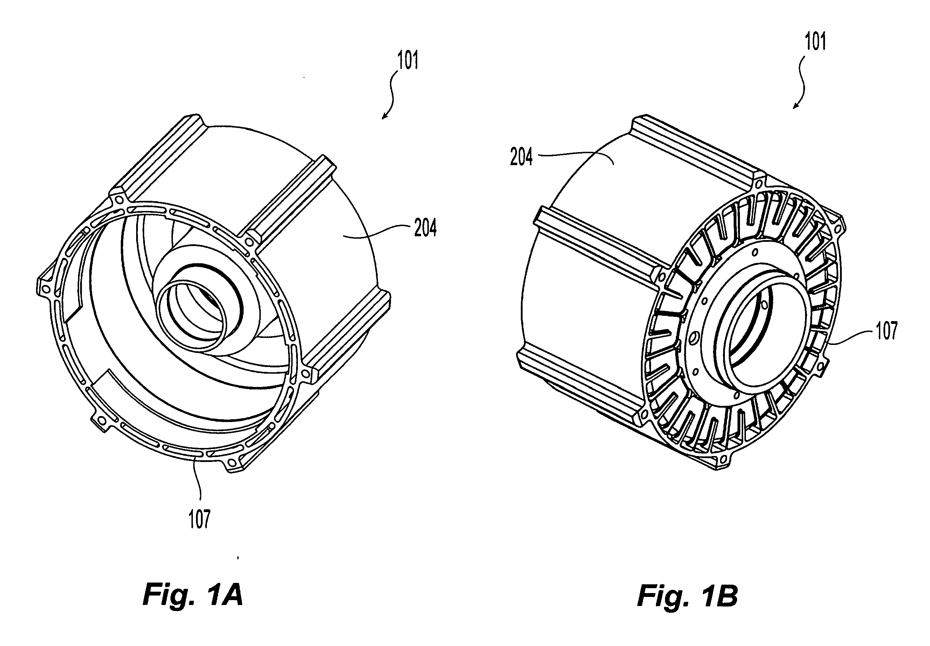

The invention provides a housing for a wheel motor that has a continuous and unitary housing wall separating the electrical motor components from the mechanical transmission components of the wheel motor, while providing a structure to support the wheel motor within a vehicle with engagement to a suspension system, to a wheel, and to support a brake caliper, and further providing a cooling structure to transfer heat away from the motor components. Preferably, the electrical motor components include a stator and a rotor with the rotor engaging a axially central motor shaft communicating with the mechanical transmission components through an axially-disposed port defined by the housing wall. The mechanical transmission components preferably include a planetary gear system disposed about the motor shaft and communicating with the electrical motor components, and preferably include an output shaft that engages a wheel mount that turns a wheel surrounding the wheel motor and that shares a common longitudinal axis with the rotor, motor shaft, and wheel mount. Referring to Figs 1A-1B, the housing 101 is preferably reinforced to convey load forces through the housing wall 204 to support the wheel motor within a vehicle while connected to a suspension system at suspension mounts and the wheel at the wheel mount.

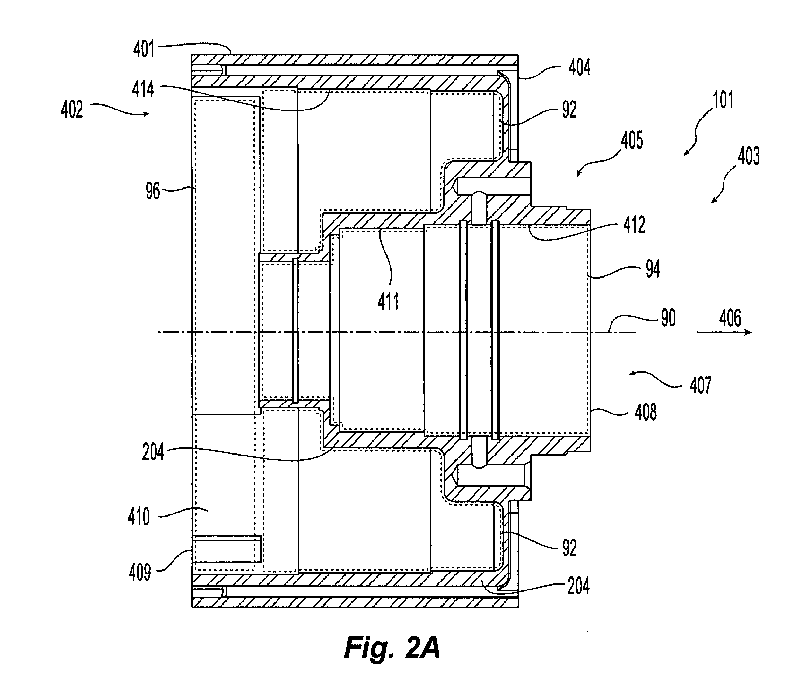

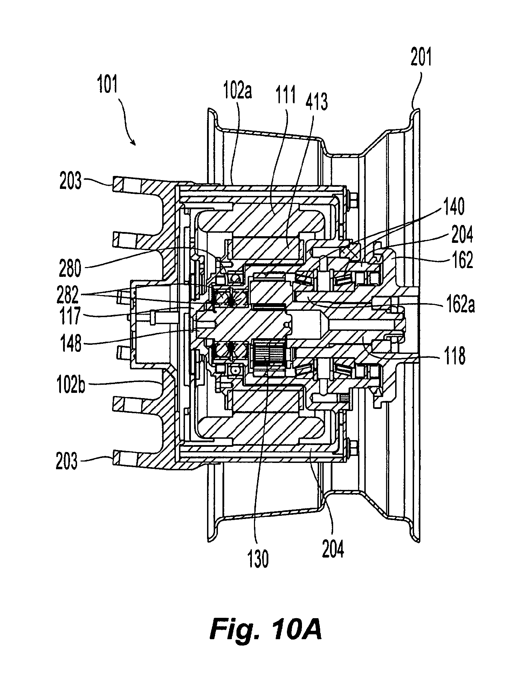

Referring to Figs. 1A-2B, the housing 101 preferably has a single-piece structure and has a continuous and unitary housing wall 204 defining a longitudinal axis 90, an outer circumferential surface 401, an inboard end 402, and an outboard end 403 of the housing wall 204. The outboard end 403 of the housing wall defines an outboard face 404 orthogonal to the axis 90. The outboard face 404 extends radially inwardly from the outer circumferential surface 401 of the housing wall towards the axis 90 to a portion 405 of the housing wall extending axially in an outboard direction 406 to define an outboard aperture 407 communicating with a first interior volume 408 of the housing. The inboard end 402 of the housing wall extends longitudinally to define an inboard aperture 409 that is larger than the outboard aperture 407 and that communicates with a second interior volume 410 of the housing. The second interior volume 410 circumferentially surrounds at least a portion of the first interior volume 408. Referring to Figs. 2A-2B and 10A-10B, a motor shaft 148 is disposed on the axis 90 and extends between the first and second interior volumes 408, 410. The motor shaft is supported by motor bearings 282 disposed in the first interior volume 408 about the motor shaft 148 and abutting a first interior surface 411 of the housing wall 204. A wheel mount 162 extends from the outboard face 404. An inboard end 162a of the wheel mount 162 communicates with the motor shaft 148 through a planetary gear assembly 130, 132, 138. The wheel mount 162 is supported by wheel mount bearings 140 disposed in the first interior volume 408 about the wheel mount 162 and abut a second interior surface 412 of the housing wall 204 and have an inner diameter that is greater than an inner diameter of the first interior surface 411. A rotor 117 engages an end of the motor shaft 148 disposed in the second interior volume 410. Magnets 413 of the rotor 117 are disposed circumferentially about the first interior volume 408. A stator 114 is disposed on a third interior surface 414 of the housing wall 204 in the second interior volume 410 and circumferentially surrounding the first interior volume 408. The stator 114 circumferentially surrounds the motor bearings 282, a planetary gear 130 of the planetary gear assembly 130, 132, 138, and at least one of the wheel mount bearings 140.

Referring to Figs. 1A-2B, the continuous and unitary housing wall 204 defines a toroidal volume, a disc volume, and a cylindrical volume that all share a common longitudinal axis 90. Referring to Fig. 2A, the toroidal volume 92 is disposed circumferentially around an end portion of the cylindrical volume 94 and the disc volume 96 is proximate to the end of the cylindrical volume 94. At the end of the cylindrical volume 94, a portion of the toroidal volume 92 communicates with the disc volume 96 to define a common toroidal-disc volume 92, 96. The housing wall 204 is disposed between the end portion of the cylindrical column and the toroidal-disc volume. Preferably, the housing wall 204 also surrounds the radial periphery of the common toroidal-disc volume 92, 96.

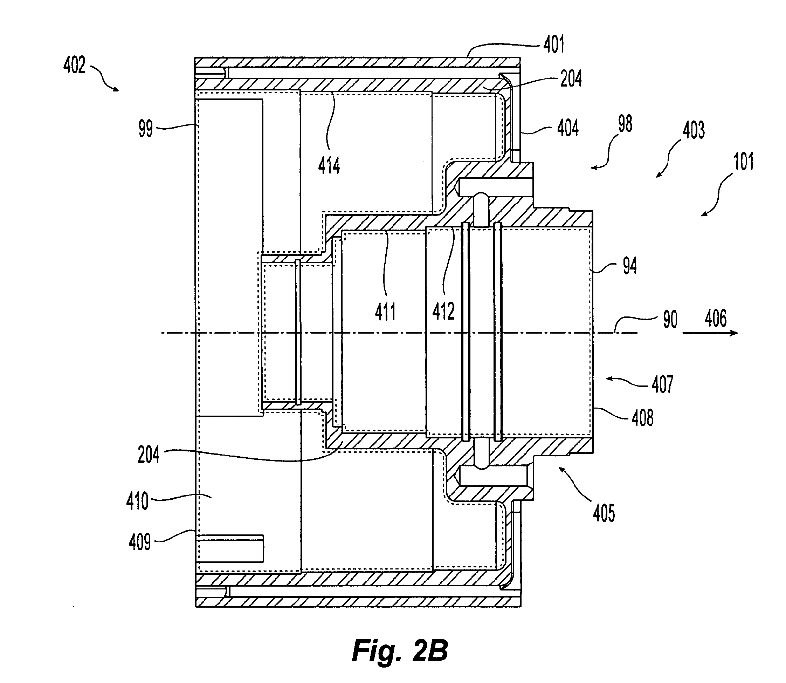

The continuous and unitary housing wall 204 also defines a bowl-shaped volume and a cylindrical volume having a common longitudinal axis. Referring to Fig. 2B, a concave side 98 of the bowl-shaped volume 99 is disposed circumferentially around an end portion of the cylindrical volume 94. The housing wall 204 is disposed between the end portion of the cylindrical volume 94 and the bowl-shaped volume 99. Preferably, the housing wall 204 also surrounds the radial periphery of the bowl-shaped volume 99.

The electrical motor components are disposed within the toroidal-disc or bowl-shaped volumes and the mechanical transmission components are disposed in the cylindrical volume. Preferably, the stator is disposed in the toroidal portion of the toroidal-disc volume, the rotor is disposed in the toroidal portion and disc portion of the toroidal-disc volume, and a portion of the motor shaft is disposed in the disc portion of the toroidal-disc volume. Also, preferably, the radial exterior surface of the stator to engage the housing wall to form a path for the conduction of heat from the stator to the housing wall. Also preferably, the planetary gears are between the motor shaft and the output shaft to transmit power from the motor to the output shaft. Preferably, the planetary gears and most or all of the bearings supporting the motor and output shafts are disposed on a common portion of the longitudinal axis surrounded by the stator. The output shaft engages a wheel mount engaging a wheel that surrounds the wheel motor and, preferably the wheel is disposed on a common portion of the longitudinal axis surrounded by the stator.

The arrangements of the motor, transmission, and load bearing components of the wheel motor, and the shape of the housing wall is preferably modified to provide for various embodiments. The separation of the electrical motors components on one side of the housing wall from the transmission and load-bearing components on the other side of the housing wall allows the wheel motor to be divided into a portion having electrical components in a dry medium that is primarily air or in a wet medium having a cooling fluid, and into a portion having relatively oily transmission and load-bearing components in a medium that is primarily lubricant or a mixture of air and lubricant. The separation of the electrical motor components on one side of the housing wall from the transmission and load-bearing components on the other side of the housing wall allows the assembly and disassembly of the wheel motor to be divided into a motor assembly and a transmission and load-bearing assembly, and the transmission and load-bearing assembly is preferably further divided into a separate transmission assembly and load-bearing assembly. The motor components also are preferably pre-assembled before installation into the housing or installed into the housing as individual components without installing or removing components from the transmission and load-bearing side of the housing. Likewise, the motor components are preferably uninstalled or disassembled as an assembly or as individual components without accessing or removing components from the transmission and load-bearing side of the housing. The transmission and load-bearing components are preferably similarly pre-assembled before installation into the housing or installed into the housing as individual components without installing or removing components from the motor side of the housing. Likewise, the transmission and load-bearing components are preferably uninstalled or disassembled as an assembly, as assemblies, or as individual components without accessing or removing components from the motor side of the housing.

Several embodiments are provided in the description of the preferred embodiments in which features common to each embodiment are similarly shown and numbered.

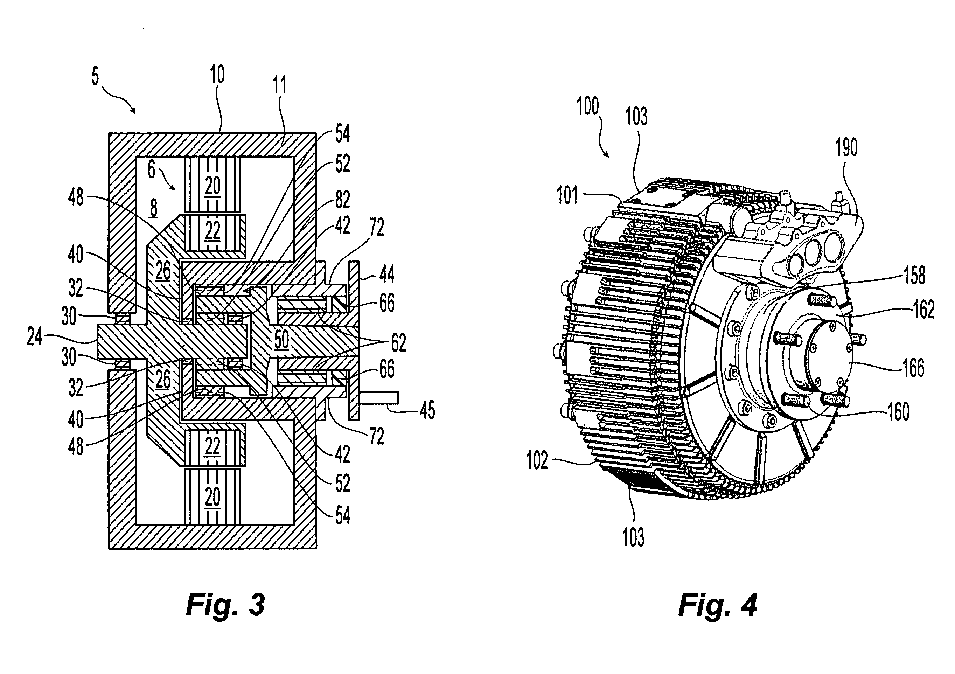

Fig. 3 illustrates a wheel motor 5. The motor 5 has a housing 10 with an interior compartment 8 containing a motor 6. A stator 20 (shown as a section through a lamination stack) with windings (not shown, but compatible with brushless DC motor technology) is mounted to an inside surface of the interior compartment 8 in such a manner as to conduct heat to the wall of the housing 10.

A rotor 26 rotates with a fixedly-attached (or integral) shaft 24 which is supported by bearings 30 and 42, which are load-bearing elements. The rotor 26 has permanent magnetic pole pieces 22 on a perimeter of the rotor 26 which include the rotor lamination stack (the permanent magnets are not shown). The rotor 26 is caused to turn by excitation of the windings (not shown) of the stator 20 causing an attached, or integral, sun gear 52 to rotate. Planetary gears 54 rotate on stub shafts 40 attached to a gear set carrier 50. The planetary gears 54 mesh with the sun gear 52 and also with a ring gear 48, which is affixed to the housing 10 and that forms a transmission assembly including transmission elements. When the shaft 24 rotates, the gear set carrier 50 rotates at a reduced angular rate determined by the ratio of the sun gear 52 diameter and the ring gear 48 diameter. A wheel mount 44 is attached to the gear set carrier 50 and is rotationally supported by main bearings 62, which are also load-bearing elements. A seal 66 isolates the bearing and transmission components in a recess 82 (that provides the cylindrical volume 94) from the outside of the wheel motor and a seal 32 isolates the electrical motor components from the bearing and transmission components in the recess 82.

When the rotor 26 rotates, torque is transmitted through the sun gear 52, rotating the planetary gears that revolve around the ring gear 48 to rotate the gear set carrier 50, and thereby rotate the wheel mount 44. An automotive wheel (not shown) is preferably attached to lugs 45 (only one shown, but they would be arrayed as appropriate for mounting an automotive wheel) projecting from the wheel mount 44, and defining the outboard direction of the wheel motor 5. Preferably, wheels are used that have dishing sufficient to place the longitudinal center of the tire on the longitudinal axis at or proximate to the longitudinal center defined by bearings 62. The support provided by the wheel is conveyed to the main bearings 62 and to the housing 10. The housing 10 preferably provides suspension mounts 103 and reinforcements to permit attachment to a suspension of a vehicle.

Heat conduction from the stator 20 is preferably enhanced by the use of mating surfaces that have been machined to provide high heat diffusion to the wall of housing 10 or a conforming material or pad (e.g., thermal paste) intermediate element that enhances thermal conduction. The housing is preferably of high diffusivity material, such as aluminum or aluminum alloy. The housing is also preferably provided with cooling fins 102 over its exterior surface (as illustrated in the housing 101 of Fig. 4). In certain preferred embodiments, the housing preferably has a water jacket 107 to permit the flow of cooling fluid through the housing, as illustrated in Figs. 1A-1B. The use of the water jacket allows various materials to be used for the housing 101 in different applications, e.g., a housing made of steel is preferred when greater structural rigidity is required.

Note that the shape of the housing 10 is such that a recess 82 is defined by the housing wall 11. The main bearing 62 is located within the recess 82. Also, the planetary gears 54, ring gear 48, and sun gear 52 are located within the recess 82. The transmission and load-bearing elements are located in a recess 82 as defined by the housing 10 and thus isolated from interior compartment 8 of the housing 10 by the housing wall 11. The housing 10, which contains the motor 6 in its interior compartment 8, therefore also separately houses the motor components (including stator 20 and rotor 26) and the transmission and load-bearing elements in a single monolithic structure that also withstands vehicle load forces transmitted to the housing 10 via wheel mount 44 and suspension mounts 103. The configuration is also axially compact by virtue of the fact that the planetary gears 54 are aligned with the stator 20 and rotor 26. Also, the mass of the housing 10 serves the additional function to diffuse heat, and serves to transfer heat to the exterior surface of housing 10 which is preferably provided with cooling fins 102. The housing 10 also preferably provides support for a brake caliper 190 as shown in Fig. 2. The bearing sleeve 72 also preferably provide an arrangement in which the bearing 62 and wheel mount 44 is preferably removed as an assembly by unbolting the bearing sleeve 72 from the housing.

Fig. 4 is an isometric view of a wheel motor 100 showing the housing 101, brake caliper 190, and wheel mount 162. The housing 101, which corresponds to the housing 10 in Fig. 3, has cooling fins 102. Suspension mounts 103 are preferably provided on the housing. A bearing sleeve 158, lug bolts 160, and a sealing cap 166 are also shown in Fig. 4.

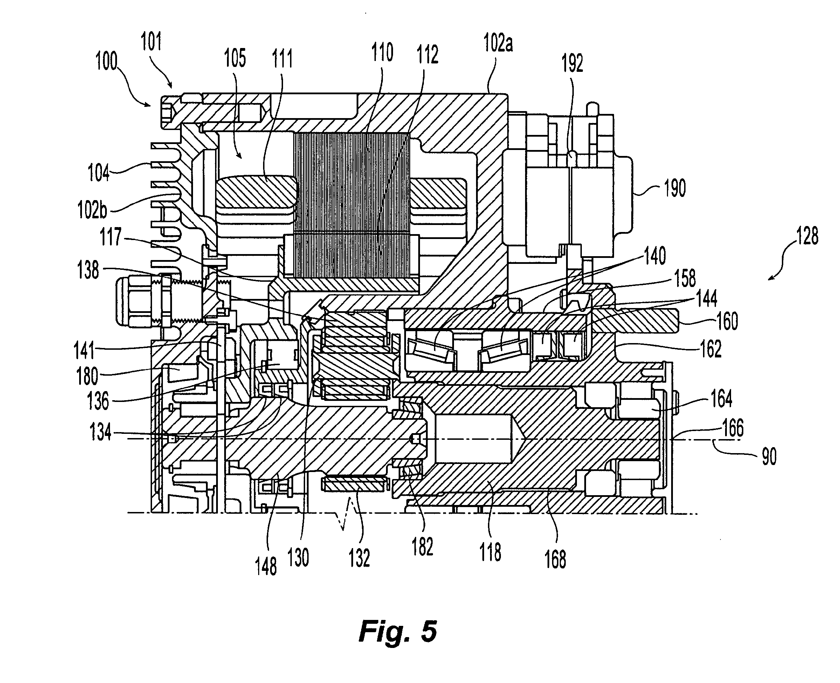

Fig. 5 is a cross-section view of an upper portion of wheel motor 100 which provides additional detail as compared to Fig. 3. The wheel motor 100 has a housing shell 102a which forms a housing 101 in combination with a rear housing plate 102b. Both the housing shell 102a and rear housing plate 102b are preferably, though not necessarily, provided with cooling fins 104. The housing 101 substantially encloses a motor 105 that includes a stator 111 (with the stator lamination stack 110 shown) and a rotor 117 (with the rotor lamination stack 112 shown).

The shape of the housing shell 102a defines an interior compartment or well 128 that encloses various transmission and load-bearing elements. The stator 111 is attached to the housing shell 102a in such a manner as to conduct heat to the housing shell 102a. The rotor 117 rotates on a fixedly-attached (or integral) shaft 148 to which it is keyed, thereby causing the shaft 148 to rotate with the rotor 117. Ball bearings 136 and taper bearings 180 support the rotor 117. The shaft 148 is supported by taper bearings 180 and 182. The rotor 117 has permanent magnetic pole pieces on its perimeter within the rotor lamination stack 112.

The rotor 117 is turned by excitation of the stator 111, causing a pinion (sun) gear 132, which is attached or integral to the shaft 148, to rotate. Planetary gears 130 rotate on gear set pins attached to a gear set carrier 118. The planetary gears 130 mesh with the pinion (sun) gear 132 and, simultaneously, mesh with a ring gear 138, which is affixed to the housing shell 102a. When the shaft 148 rotates, the gear set carrier 118 rotates at a reduced angular rate determined by the ratio of the pinion (sun) gear 132 diameter to the ring gear 138 diameter. A wheel mount 162 is attached to the gear set carrier 118 and is rotationally supported by main taper bearings 140.

The motor 105 components (such as the stator 111 and rotor 117) are preferably isolated from the transmission and load-bearing components (such as planetary gears 130 and bearings 140) by a double seal 134. A resolver 141 or rotary encoder or any suitable form of rotation position indicator is preferably integrated in the housing 101 interior on the non-transmission side of the double seal 134. The resolver 141 or similar device is preferably configured to indicate the rotational position of the rotor 117 to a motor controller (not shown) that excites the stator 111. A brake rotor 192 is preferably attached to the wheel mount 162 and a complementary caliper 190 is mounted on the housing shell 102a. A double seal 144 is preferably provided to isolate the transmission and load-bearing components from the exterior of the bearing well 128. A bearing sleeve 158 is preferably provided to allow the main taper bearings 140 and wheel mount 162 to be removed as an assembled unit. The wheel mount 162 is preferably fitted to the gear set carrier 118 and engaged to it by interengaging splines 168. The wheel mount 162 is preferably provided with lug bolts 160 or any suitable wheel attachment device. A cap 166 protects a hex nut 164 that is threaded onto the gear set carrier 118.

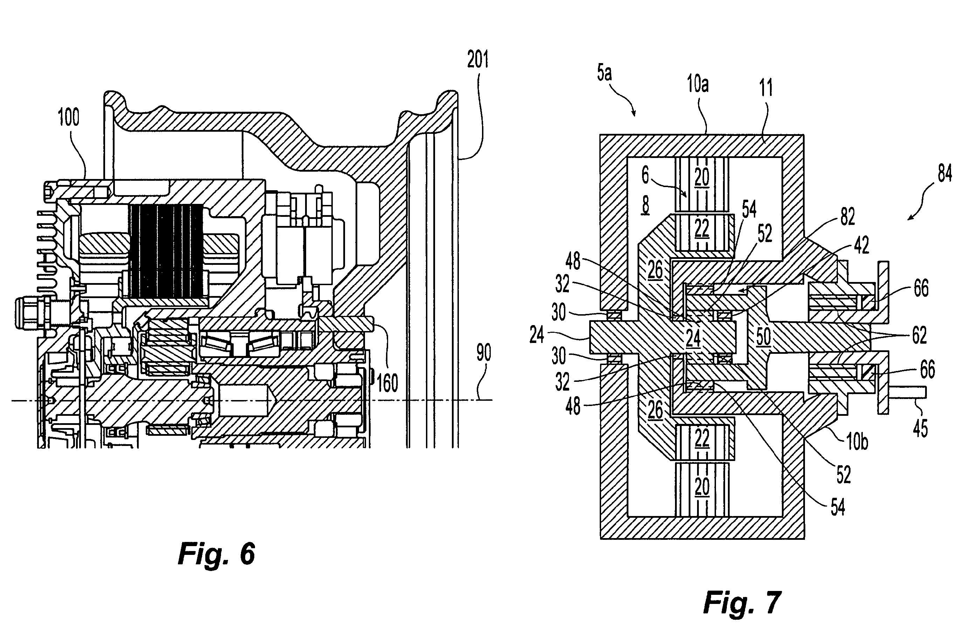

When the rotor 117 rotates, transmits torque through the pinion (sun) gear 132, rotating the planetary gears 130 which revolve around the ring gear 138 to rotate the gear set carrier 118 and rotate the wheel mount 162. Referring to Fig. 6, a wheel 201 is preferably attached to lug bolts 160 projecting from the wheel mount 162. The wheel 201 has a dishing sufficient to place the longitudinal center of an attached tire (not shown) on the wheel 201 directly surrounding the taper bearings 140 to share the same or overlapping portions of the longitudinal axis 90. The force applied by the tire on the wheel mount 162 is transmitted to the taper bearings 140 and subsequently to the housing shell 102a. The housing shell 102a is preferably provided with suspension mounts 103 and additional reinforcement structures to permit attachment to a suspension of a vehicle.

Heat conduction from the stator 114 is enhanced by the use of mating surfaces that have been machined to facilitate transmission of heat to the housing shell 102a or by a conforming material or pad (e.g., thermal paste) intermediate element that is preferably used to enhance conduction. The housing 101 is preferably of high diffusivity material, such as aluminum or an aluminum alloy. The housing 101 is preferably provided with cooling fins 102 on the exterior of housing 101.

The shape of the housing 101 provides a recess or well 128. The taper bearing 140 is located within the recess or well 128 as is a load-bearing component. The housing 101 fully encloses the motor 105 in an interior compartment and separates the motor components from the transmission and load-bearing components. The preferred embodiments allow for a longitudinally compact structure by virtue of the fact that the gearing elements (planetary, ring, and sun gears) are aligned with the stator 111 so that these structures have axes that are common with each other. Also, the housing 101 diffuses heat due the transfer of heat to an exterior surface of the housing that preferably has cooling fins 102. The housing 101 is also preferably provides a support for the brake caliper 190. In a preferred embodiment, the brake caliper 190 is disposed at a distance from the longitudinal axis 90 of the wheel motor that is within an envelope defined by the outer circumferential surface 401 of the housing 101.

Referring to Fig. 7, an embodiment of a wheel motor 5a similar to that of Fig. 3 is illustrated. Referring to Fig. 7, wheel bearings 62 are located towards the outboard side 84 of the housing 10a and supported by supports 10b extending from the housing 10a.

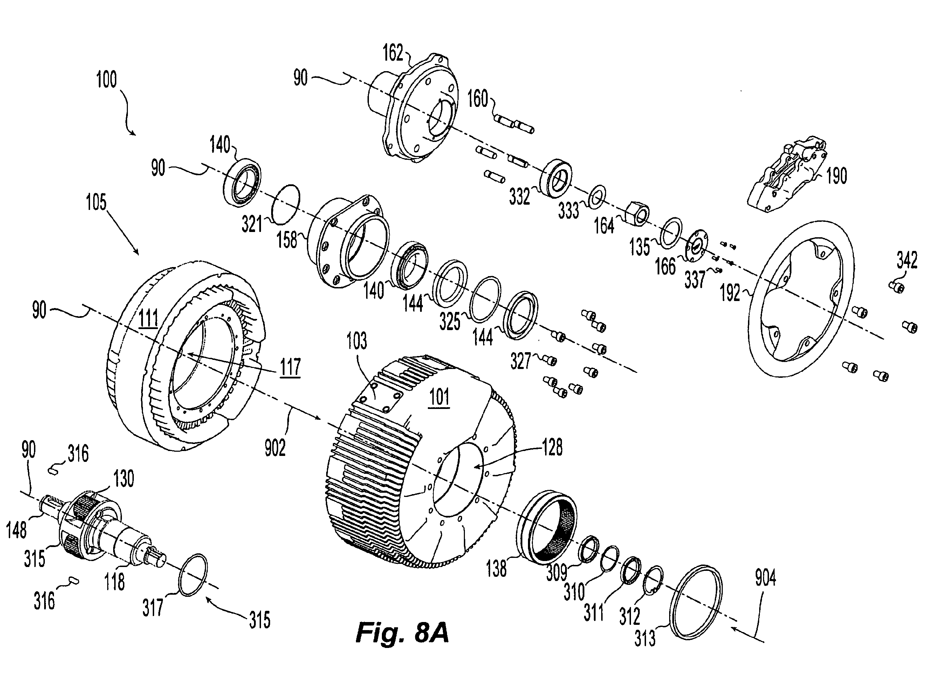

Fig. 8A is an exploded view of the motor, transmission, and load-bearing component portions of the wheel motor 100 for purposes of explaining the assembly process. Referring to Fig. 8A and Fig. 5, the motor 105 components include stator 111 and rotor 117 (not fully shown) which is assembled and connected to the housing 101 in the direction of arrow 902 with a ball bearings 136 (not shown in Fig. 8A but shown in Fig. 5) supporting rotation of the rotor 117 relative to the housing 101. The transmission components include the ring gear 138 which is seated in the housing 101 with various seals, washers, and retaining rings 309, 310, 311, 312, 313, and 317, either as an individual component or as part of a shaft assembly. A shaft assembly 315, which is another transmission component, contains planetary gears 130 and the sun gear 132 (not shown separately) as well as the gear set carrier 118, is inserted into the ring gear 138 in the direction of arrow 904 and held in place by a clip (not shown). Keys 316 releasably lock the shaft 148 to the rotor 117.

The load-bearing components include a bearing sleeve 158 subassembly that is assembled, either in part or together with the transmission components, by inserting both main taper bearings 140 into bearing sleeve 158. Various seals and washers 321 and 325 are attached to form a bearing sleeve subassembly that is then inserted in, and bolted together with, the housing 101 using bolts 327 in the direction of arrow 904.

Additional components are assembled together as an wheel mount assembly or assembled as individual components to the partially-assembled wheel motor. Lug bolts 160 are assembled to the wheel mount 162 and a spline spacer 332 inserted in the wheel mount 162 that is intended to engage the end of the gear set carrier 118 once assembled with the partially-assembled wheel motor. When assembled with the wheel motor, the wheel mount 162 is placed on the end of the gear set carrier 118 in the direction of arrow 904 and secured using washer 333 and nut 164. The washer 335 and end cap 166 are then secured to the wheel mount 162 with screws 337. The brake rotor 192 is bolted to the wheel mount 162 with bolts 342 and the caliper 190 is bolted to the housing 101. All components of the assembled wheel motor are assembled in a position that is either intersecting or at a fixed distance from the longitudinal axis 90.

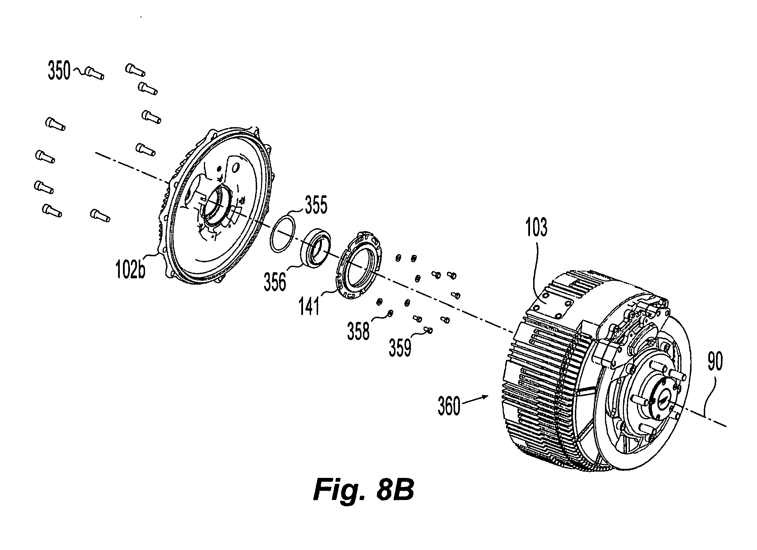

Referring now to Fig. 8B and Fig. 5, additional components supporting the motor 100 and housing 101 are assembled by attaching a resolver 141 to the rear housing plate 102b with bolts and washers 358 and 359. A shim 355 and seal 356 are inserted into the rear housing plate 102b, and the subassembly is bolted with bolts 350 to complete the assembly of the wheel motor 100 in relation to longitudinal axis 90.

The assembly method provides a recess (bearing well 128) in the housing 101 that faces in the outboard direction when the motor is mounted on a vehicle. The motor components of the wheel motor and the components contained in the bearing sleeve 158 or inserted into the well 128 are readily removable from the wheel motor by reversing all or some of the assembly steps. In a preferred method, the wheel mount 162 is installable and removable as an assembly that includes the gear set carrier 118. Also preferably, the bearing sleeve 158 is installable and removable as an assembly that includes the bearings contained in the bearing sleeve 158. In an alternative embodiment, the assembly that includes the bearing sleeve 158 also includes the wheel mount 162. Although the assembly process involves assembling various subassemblies prior to a full assembly of the wheel motor, in taking the wheel motor apart, the subassemblies are preferably removed as a unit or partially disassembled before removal from the wheel motor, as warranted by the need for the disassembly. The preferred method includes identifying a wheel motor that include the subassemblies and then removing the subassemblies from such a wheel motor.

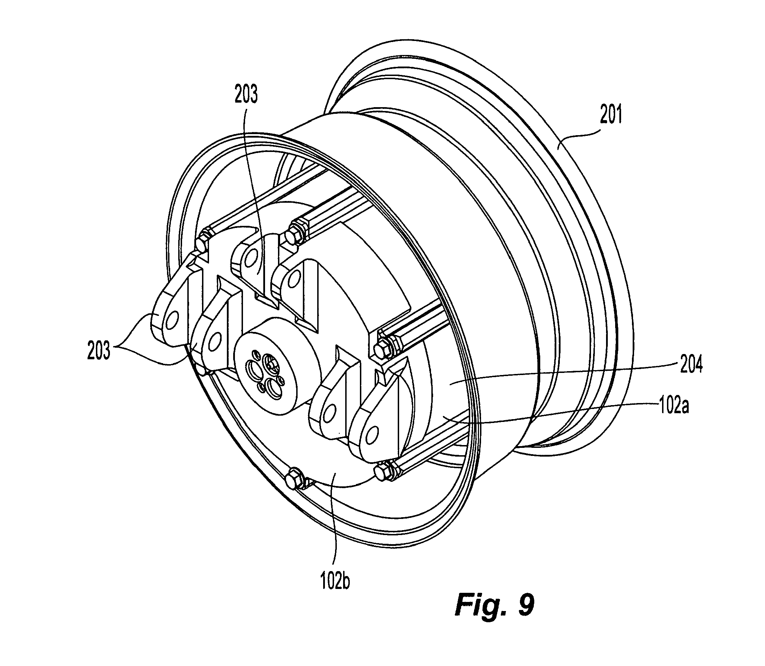

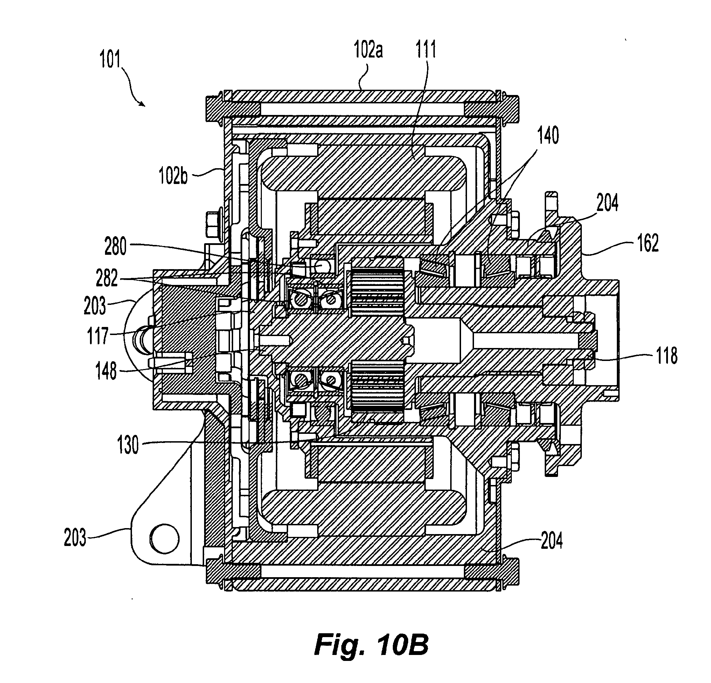

In an alternative embodiment, the wheel motor is mounted to the suspension system of a vehicle on the outer surface of the rear housing plate 102b to engage the housing wall 204 referred to in Fig 1A-2B. Referring to Figs. 4 and 9, the suspension mounts 103 of Fig. 4 are not present and suspension mounts 203 are disposed on the exterior surface of the rear housing plate 102b. This inboard placement of the suspension mounts permits the stator, and the outer radial dimension of the housing shell 102a and housing wall 204, to be increased to occupy a larger portion of the space available within the interior of wheel 201. Figs. 10A-10B provide cross-sectional views of the wheel motor of Fig. 9, as viewed from the top of the wheel motor, for Fig. 10A, and as viewed from the side of the wheel motor, for Fig. 10B. Referring to Figs. 10A-10B, in an alternative preferred embodiment the bearing sleeve 158 is omitted and the taper bearings 140 are sized to press against the housing wall 204 directly. Also, the taper bearing 180 is removed and bearing 280 is placed more outboard to share a common portion of the longitudinal axis 90 defined by stator 111, and the taper bearing 182 is removed and the shaft 148 is supported by the bearings 282.

Referring to the preferred embodiment of Fig. 9, the suspension mounts are preferably disposed so that the connection points at the rear housing plate 102b are disposed in a plane that intersects the longitudinal axis 90 of the wheel motor and, more preferably, in a plane that is orthogonal to the axis 90. Alternatively, the suspension mounts on the radial extremity of the housing 101 are disposed in a circumferential plane that is parallel to the axis 90.

In yet another embodiment, the exemplary wheel motors, such as wheel motor 100, are installed in an electric vehicle or hybrid electric vehicle such as those shown and described in U.S. Provisional Patent Application No. 61/028,165, filed February 12, 2008 and in International Application No. PCT/US2007/065865, filed April 3, 2007, both of which are hereby incorporated by reference in their entireties, and in particular for their descriptions of vehicles and wheel motor systems that contain a wheel motor.

While the present invention has been disclosed with reference to certain embodiments, numerous modifications, alterations, and changes to the described embodiments are possible without departing from the scope of the present invention, as defined in the appended claims. Accordingly, it is intended that the present invention not be limited to the described embodiments, but that it has the full scope defined by the language of the following claims, and equivalents thereof.

## Claims

1. A wheel motor, comprising:
a housing (101) having a continuous and unitary wall (204) separating the electrical motor components from the mechanical transmission components of the wheel motor, the wall (204) defining a toroidal volume (92) surrounding a cylindrical volume (94), the toroidal volume (92) and cylindrical volume (94) having a common longitudinal axis (90) ;
a motor disposed in the toroidal volume (92), the motor including a stator (114) and a rotor (117) at least partially disposed in the toroidal volume (92), at least one of the rotor (117) and stator (114) defining a motor length along the axis and disposed at a first position on the axis;
a planetary gear set disposed within the cylindrical volume (94), the planetary gear set including at least one planetary gear;
and the at least one planetary gear defining a gear length along the axis that is less than the motor length and defining a second position on the axis that is within the first position;
and a portion of a wheel mount (162) disposed within the cylindrical volume (94);
wherein the housing (101) has an outboard end (403) and an inboard end (402),
and wherein the planetary gear set is accessible from the outboard end (403) of the housing (101) without removal of the motor from the housing
and wherein the motor is accessible from the inboard end (402) of the housing (101) without removal of the planetary gear set from the housing (101).

2. The motor of claim 1, further comprising
a transition of the housing wall (204) from the toroidal volume (92) to the cylindrical volume (94) defining a recess accessible from the outboard end (403) of the housing (101), the housing (101) having a reinforcement portion for attachment to a vehicle suspension;
a transmission disposed within the recess;
a wheel mount (162) disposed within the recess and coupled to the transmission, the wheel mount (162) extending from the outboard side of the housing (101);
stator (114) and rotor (117) elements disposed within the interior compartment to radially surround the recess; and
a wheel bearing at least partly within the recess and supporting the outboard side of the housing (101).

3. The wheel motor of claim 2, the transmission having a planetary gear train.

4. The wheel motor of any one of claims 2 to 3, the wheel bearing disposed within the recess.

5. The wheel motor of any one of claims 2 to 4, further comprising a wheel engaging the wheel mount (162) so as to be radially and longitudinally centered about the wheel bearing.

6. The wheel motor of any one of claims 2 to 5, the rotor (117) engaging a shaft that engages the transmission.

7. The wheel motor of any one of claims 2 to 6, further comprising a bearing sleeve sized to fit within the recess and having an interior surface formed to engage the wheel bearing and the wheel mount (162) as a unit separable from the housing (101).

8. The wheel motor of any one of claims 2 to 7, further comprising a transmission output shaft having a output shaft splined portion that engages a splined portion of the wheel mount (162).

9. The wheel motor of any one of claims 2 to 8, wherein the housing (101) is attachable to a suspension member of a vehicle.

10. The wheel motor of any one of claims 2 to 9, the transmission having planetary gears carried by a gear set carrier, the wheel bearing disposed adjacent to and at a radial position at least in part equal to an axis of rotation of one of the planetary gears, the gear set carrier having a shaft portion disposed within an interior diameter of the wheel bearing.

11. The wheel motor of any one of claims 2 to 10, further comprising a brake caliper affixed to the housing (101).

12. The wheel motor of any one of claims 2 to 11, the housing (101) being substantially shaped as a disk with a depression formed on a side of the disk by the recess.

13. The wheel motor of any one of claims 2 to 12, the housing (101) having an inboard side opposite the outboard side, the inboard side having a substantially flat surface.

14. The wheel motor of any one of claims 2 to 12, the stator (114) being affixed to an interior surface of the housing (101) to diffuse heat from the stator (114) to the housing (101) as a heat sink, the housing (101) supporting the wheel bearing and functioning as a primary dissipater of heat for the rotor (117) and stator (114).

## Patentansprüche

1. Radmotor, mit:
einem Gehäuse (101), das eine ununterbrochene und einheitliche Wand (204) aufweist, die die elektrischen Motorkomponenten von den mechanischen Kraftübertragungskomponenten des Radmotors trennt, wobei die Wand (204) ein torusförmiges Volumen (92) definiert, das ein zylindrisches Volumen (94) umgibt, wobei das torusförmige Volumen (92) und das zylindrische Volumen (94) eine gemeinsame Längsachse (90) aufweisen,
einem Motor, der in dem torusförmigen Volumen (92) angeordnet ist, wobei der Motor einen Stator (114) und einen Rotor (117) umfasst, die zumindest teilweise in dem torusförmigen Volumen (92) angeordnet sind, wobei der Rotor (117) und/oder der Stator (114) eine Motorlänge längs der Achse definieren und an einer ersten Position auf der Achse angeordnet sind,
einem Planetengetriebesatz, der in dem zylindrischen Volumen (94) angeordnet ist, wobei der Planetengetriebesatz mindestens ein Planetengetriebe umfasst,
und wobei das mindestens eine Planetengetriebe eine Getriebelänge längs der Achse definiert, die kleiner ist als die Motorlänge und eine zweite Position auf der Achse definiert, die innerhalb der ersten Position liegt,
und einem Teil einer Radanbringung (162), der in dem zylindrischen Volumen (94) angeordnet ist,
wobei das Gehäuse (101) ein fahrzeugäußeres Ende (403) und ein fahrzeuginneres Ende (402) aufweist,
und wobei der Planetengetriebesatz von dem fahrzeugäußeren Ende (403) des Gehäuses (101) ohne Entnahme des Motors aus dem Gehäuse zugänglich ist
und wobei der Motor von dem fahrzeuginneren Ende (402) des Gehäuses (101) ohne Entnahme des Planetengetriebesatzes aus dem Gehäuse (101) zugänglich ist.

2. Motor nach Anspruch 1, der des weiteren umfasst:
einen Übergang der Gehäusewand (204) von dem torusförmigen Volumen (92) zu dem zylindrischen Volumen (94), der eine Aussparung definiert, die von dem fahrzeugäußeren Ende (403) des Gehäuses (101) zugänglich ist, wobei das Gehäuse (101) einen Verstärkungsabschnitt für die Befestigung an einer Fahrzeugaufhängung aufweist,
eine Kraftübertragung, die in der Aussparung angeordnet ist,
eine Radanbringung (162), die in der Aussparung angeordnet und mit der Kraftübertragung gekoppelt ist, wobei sich die Radanbringung (162) von der fahrzeugäußeren Seite des Gehäuses (101) erstreckt,
Statorelemente (114) und Rotorelemente (117), die in dem Innenraum angeordnet sind, um die Aussparung radial zu umgeben,
ein Radlager, das sich zumindest teilweise innerhalb der Aussparung befindet und die fahrzeugäußere Seite des Gehäuses (101) trägt.

3. Radmotor nach Anspruch 2, wobei die Kraftübertragung einen Planetengetriebezug aufweist.

4. Radmotor nach einem der Ansprüche 2 bis 3, wobei das Radlager innerhalb der Aussparung angeordnet ist.

5. Radmotor nach einem der Ansprüche 2 bis 4, der des weiteren ein mit der Radanbringung (162) in Eingriff befindliches Rad aufweist, so dass es radial und longitudinal um das Radlager zentriert ist.

6. Radmotor nach einem der Ansprüche 2 bis 5, wobei der Rotor (117) mit einer Welle in Eingriff ist, die mit dem Getriebe in Eingriff ist.

7. Radmotor nach einem der Ansprüche 2 bis 6, der des weiteren eine Lagerhülse umfasst, die so bemessen ist, dass sie in die Aussparung passt, und eine innere Oberfläche aufweist, die so geformt ist, dass sie mit dem Radlager und mit der Radanbringung (162) als eine von dem Gehäuse (101) trennbare Einheit in Eingriff ist.

8. Radmotor nach einem der Ansprüche 2 bis 7, der des weiteren eine Getriebeausgangswelle umfasst, die einen Ausgangswellen-Keilnutabschnitt aufweist, der mit einem Keilnutabschnitt der Radanbringung (162) in Eingriff ist.

9. Radmotor nach einem der Ansprüche 2 bis 8, wobei das Gehäuse (101) an einem Aufhängungselement eines Fahrzeugs befestigbar ist.

10. Radmotor nach einem der Ansprüche 2 bis 9, wobei die Kraftübertragung Planetengetriebe aufweist, die von einem Getriebesatzträger getragen werden, wobei das Radlager in der Nähe eines der Planetengetriebe und an einer radialen Position, die zumindest zum Teil gleich einer Drehachse des einen dieser Planetengetriebe ist, angeordnet ist, wobei der Getriebesatzträger einen Wellenabschnitt aufweist, der innerhalb eines Innendurchmessers des Radlagers angeordnet ist.

11. Radmotor nach einem der Ansprüche 2 bis 10, der des weiteren einen an dem Gehäuse (101) befestigten Bremssattel (101) aufweist.

12. Radmotor nach einem der Ansprüche 2 bis 11, wobei das Gehäuse (101) im wesentlichen wie eine Scheibe mit einer Vertiefung, die auf einer Seite der Scheibe durch die Aussparung gebildet ist, geformt ist.

13. Radmotor nach einem der Ansprüche 2 bis 12, wobei das Gehäuse (101) eine fahrzeuginnere Seite gegenüber der fahrzeugäußeren Seite aufweist, wobei die fahrzeuginnere Seite eine im wesentlichen ebene Oberfläche aufweist.

14. Radmotor nach einem der Ansprüche 2 bis 12, wobei der Stator (114) an einer inneren Oberfläche des Gehäuses (101) befestigt ist, um Wärme vom Stator (114) an das Gehäuse (101) als eine Wärmesenke zu verteilen, wobei das Gehäuse (101) das Radlager trägt und als eine primäre Wärmeabführung für den Rotor (117) und den Stator (114) dient.

## Revendications

1. Moteur de roue, comprenant :
un boîtier (101) ayant une paroi continue et unitaire (204) qui sépare les composants électriques du moteur vis-à-vis des composants de transmission mécaniques du moteur de roue, la paroi (204) définissant un volume toroïdal (92) entourant un volume cylindrique (94), le volume toroïdal (92) et le volume cylindrique (14) ayant un axe longitudinal commun (90) ;
un moteur disposé dans le volume toroïdal (92), le moteur incluant un stator (114) et un rotor (117) au moins partiellement disposés dans le volume toroïdal (92), l'un au moins du rotor (117) et du stator (114) définissant une longueur du moteur le long de l'axe et étant disposé à une première position sur l'axe ;
un groupe d'engrenages planétaires disposé dans le volume cylindrique (94), le groupe d'engrenages planétaires incluant au moins un engrenage planétaire ;
ledit au moins un engrenage planétaire définissant une longueur d'engrenage le long de l'axe qui est inférieure à la longueur du moteur et définissant une seconde position sur l'axe qui se trouve à l'intérieur de la première position ;
et une portion d'une monture de roue (162) disposée dans le volume cylindrique (94) ;
dans lequel le boîtier (101) a une extrémité extérieure (402) et une extrémité intérieure (402),
et dans lequel le groupe d'engrenages planétaires est accessible depuis l'extrémité extérieure (403) du boîtier (101) sans enlever le moteur hors du boîtier,
et dans lequel le moteur est accessible depuis l'extrémité intérieure (402) du boîtier (101) sans enlever le groupe d'engrenages planétaires hors du boîtier (101).

2. Moteur selon la revendication 1, comprenant en outre une transition de la paroi (204) du boîtier depuis le volume toroïdal (92) vers le volume cylindrique (94) définit un évidement accessible depuis l'extrémité extérieure (403) du boîtier (101), le boîtier (101) ayant une portion de renforcement pour être attaché à une suspension de véhicule
une transmission disposée dans l'évidement ;
une monture de roue (162) disposée dans l'évidement et couplée à la transmission, la monture de roue (162) s'étendant depuis le côté extérieur du boîtier (101) ;
des éléments stator (114) et rotor (117) disposés dans le compartiment intérieur pour entourer radialement l'évidement ; et
un palier de roue au moins partiellement dans l'évidement et supportant le côté extérieur du boîtier (101).

3. Moteur de roue selon la revendication 2, dans lequel la transmission a un train d'engrenages planétaires.

4. Moteur de roue selon l'une quelconque des revendications 2 et 3, dans lequel le palier de roue est disposé dans l'évidement.

5. Moteur de roue selon l'une quelconque des revendications 2 à 4, comprenant en outre une roue qui engage la monture de roue (162) de manière à être centrée radialement et longitudinalement autour du palier de roue.

6. Moteur de roue selon l'une quelconque des revendications 2 à 5, dans lequel le rotor (117) engage un arbre qui engage la transmission.

7. Moteur de roue selon l'une quelconque des revendications 2 à 6, comprenant en outre un manchon de palier d'une taille propre à s'engager dans l'évidement et ayant une surface intérieure formée pour engager le palier de roue et la monture de roue (162) comme une unité séparable vis-à-vis du boîtier (101).

8. Moteur de roue selon l'une quelconque des revendications 2 à 7, comprenant en outre un arbre de sortie de transmission ayant une portion cannelée d'arbre de sortie qui engage une portion cannelée de la monture de roue (162).

9. Moteur de roue selon l'une quelconque des revendications 2 à 8, dans lequel le boîtier (101) peut être attaché à un élément de suspension d'un véhicule.

10. Moteur de roue selon l'une quelconque des revendications 2 à 9, dans lequel la transmission possède des engrenages planétaires portés par un porte-engrenages, le palier de roue étant disposé adjacent et à une position radiale au moins partiellement égale d' un axe de rotation de l' un des engrenages planétaires, le porte-engrenages ayant une portion d'arbre disposée dans un diamètre intérieur du palier de roue.

11. Moteur de roue selon l'une quelconque des revendications 2 à 10, comprenant en outre un étrier de frein fixé sur le boîtier (101).

12. Moteur de roue selon l'une quelconque des revendications 2 à 11, dans lequel le boîtier (101) est formé sensiblement comme un disque avec une dépression formée sur un côté du disque par l'évidement.

13. Moteur de roue selon l'une quelconque des revendications 2 à 12, dans lequel le boîtier (101) a un côté intérieur opposé au côté extérieur, le côté intérieur ayant une surface sensiblement plane.

14. Moteur de roue selon l'une quelconque des revendications 2 à 12, dans lequel le stator (114) est fixé sur une surface intérieure du boîtier (101) pour diffuser de la chaleur depuis le stator (104) vers le boîtier (101) faisant office de puits thermique, le boîtier (101) supportant le palier de roue et fonctionnant comme dissipateur primaire de chaleur pour le rotor (117) et le stator (114).
